# EUROPEAN PATENT APPLICATION

(11) **EP 2 357 805 A1**
(43) Date of publication of application: **17.08.2011**
(21) Application number: 10196538.2
(22) Date of filing: 22.12.2010
(51) Int. Cl.: H04N 5/445

(54) **Image display apparatus and method for operating the same**

(30) Priority: 23.12.2009 KR 20090130098
(71) Applicant: LG ELECTRONICS INC., Youngdungpo-gu Seoul 150-721 (KR)
(72) Inventor: Jang, Saehun, 137-724, SEOUL (KR); Kim, Uniyoung, 137-724, SEOUL (KR); Koo, Sangjun, 137-724, SEOUL (KR); Yoo, Kyunghee, 137-724, SEOUL (KR); Lee, Hyungnam, 137-724, SEOUL (KR)
(74) Representative: Cabinet Plasseraud

(57) **Abstract**

An image display apparatus and method for operating the image display apparatus are disclosed. The method includes displaying a content item or content image representing content, and displaying content sharing information about the content. The content sharing information includes a first object representing at least one of a content provider that received the content from the image display apparatus or a content provider that transmitted the content to the image display apparatus.

## Description

This application claims the benefit of Korean Patent Application No. 10-2009-0130098, filed on December 23, 2009 in the Korean Intellectual Property Office.

### BACKGROUND OF THE INVENTION

### 1. Field of the invention

The present invention relates to an image display apparatus and a method for operating the same, and more particularly, to an image display apparatus for accessing Content Providers (CPs) over the Internet and transmitting and receiving various content to and from the CPs over the Internet, and a method for operating the image display apparatus.

### 2. Description of the Related Art

An image display apparatus has a function of displaying images to a user. The image display apparatus can display a broadcast program selected by the user on a display from among broadcast programs transmitted from broadcasting stations. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services, compared to analog broadcasting.

Recently, the concept of a network TV advanced from an Internet Protocol TV (IPTV), such as a broadband TV, a Web TV, etc, has been introduced. Compared to the conventional IPTV, the broadband TV or the Web TV enables a user to access a plurality of CPs and receive content such as a variety of Video On Demand (VOD) files, games, video call service, etc. from the CPs or transmit his or her preserved content to the CPs.

Accordingly, there exists a need for developing a method for identifying content sharing information about a huge amount of content and efficiently managing the content based on the content sharing information.

### SUMMARY OF THE INVENTION

Therefore, the present invention has been made in view of the above problems, and it is an object of the present invention to provide an image display apparatus for accessing Content Providers (CPs) over the Internet and transmitting and receiving various content to and from the CPs over the Internet, and a method for operating the image display apparatus.

In accordance with an aspect of the present invention, there is provided a method for operating an image display apparatus as defined in claim 1.

In accordance with another aspect of the present invention, there is provided an image display apparatus as defined in claim 14.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates the configuration of a network in which an image display apparatus is connected to Content Providers (CPs) according to an embodiment of the present invention;
FIG. 2 is a block diagram of an image display apparatus according to an embodiment of the present invention;
FIG. 3 is an exemplary block diagram of a controller illustrated in FIG. 2;
FIGS. 4A and 4B illustrate an example of a remote controller illustrated in FIG. 2;
FIG. 5 is a block diagram of an interface illustrated in FIG. 2 and the pointing device illustrated in FIGS. 4A and 4B;
FIG. 6 illustrates an exemplary menu screen displayed on the image display apparatus according to an embodiment of the present invention;
FIG. 7 is a flowchart illustrating a method for operating an image display apparatus according to an embodiment of the present invention; and
FIGS. 8A to 12 are views referred for describing the method for operating an image display apparatus according to the embodiment of the present invention, illustrated in FIG. 7.

### DETAILED DESCRIPTION OF THE PREFERRED EMBODIMENTS

Embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

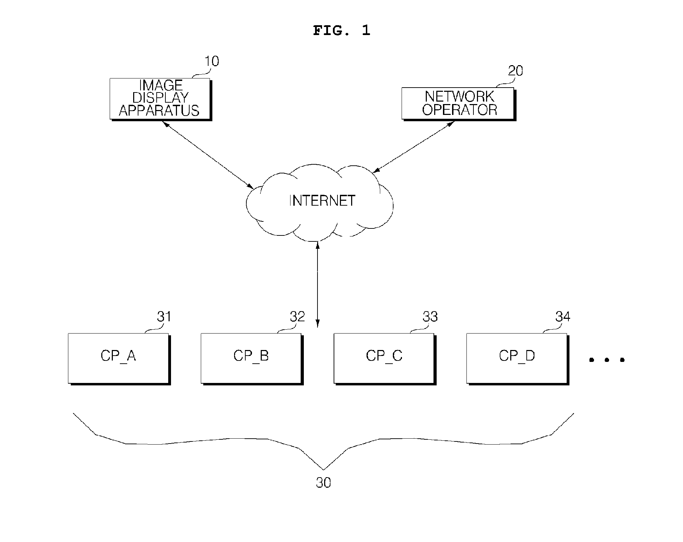

FIG. 1 illustrates the configuration of a network in which an image display apparatus is connected to Content Providers (CPs) according to an embodiment of the present invention.

Referring to FIG. 1, an image display apparatus 10 may be connected to a network operator 20 and one or more CPs 30 through a network, for example, the Internet.

The image display apparatus 10 may receive (e.g. download) content from the CPs 30 and may transmit (e.g. upload) its preserved content to the CP 30s.

To reproduce content, search for content, and display a content list on a CP basis, the image display apparatus 10 may have dedicated firmware installed therein. The firmware is a program that reproduces or executes content received from the CPs 30. The firmware may vary according to the types of content received from the CPs 30. For example, if a CP 30 is a VOD provider, the firmware may be a VOD play program. If the CP 30 is a voice call service provider, the firmware may be a video call program.

The firmware may be installed by default in the image display apparatus 10 or may be downloaded from the network operator 20 or a CP 30 and then installed in the image display apparatus 10.

The network operator 20 may provide the image display apparatus 10 with base software needed for using content received from the CPs 30 in the image display apparatus 10 or with software needed for operating the image display apparatus 10. In addition, the network operator 20 may provide the CPs 30 with hardware information of the image display apparatus 10, necessary for normal processing of content.

For instance, the network operator 20 may provide the image display apparatus 10 with a basic screen frame for content received from CPs 31 to 34 and with a user interface through which a user selects content or inputs various commands, or the resulting outputs are displayed. The network operator 20 may also provide update information of the firmware or software of the image display apparatus 10. The network operator 20 may be the manufacturer of the image display apparatus 10.

The CPs 30 generate various content that can be provided over a network, configures the content in a format reproducible in the image display apparatus 10, and provides the content to the image display apparatus 10, upon request of the image display apparatus 10. According to the present invention, content may be multimedia content that can be serviced over a network.

In an embodiment of the present invention, the CPs 30 may provide content to the image display apparatus 10 directly or via the network operator 20, over the Internet.

The image display apparatus 10 receives content from the CPs 30 and reproduces or executes the received content. According to the present invention, the image display apparatus 10 may be any display apparatus equipped with a network module such as a broadcast receiver, a network telephone, etc. The broadcast receiver may be a TV with a network module, a set-top box, etc. That is, embodiments of the present invention are applicable to any display device capable of accessing a network.

More specifically, the CPs 30 may be service providers that create content or distribute content to the image display apparatus 10.

In its sense, the CPs 30 may cover not only a general TV broadcast station and a general radio broadcast station but also a service provider other than a TV broadcast station or a radio broadcast station, such as a VOD service provider and an Audio On Demand (AOD) service provider. The VOD or AOD service provider stores broadcast programs, movies, music, etc. and services them, upon request of users. For example, if a user has missed a broadcast program that he or she wanted to view, the user may access a site that services the broadcast program and download or play back the broadcast program from the site.

In addition, the CPs 30 may cover a Music On Demand (MOD) service provider that services music to users, a video call service provider that provides a relay service for video call between users of image display apparatuses over a network, a weather information provider that provides weather information of regions, a photo service provider that provides a tool with which to edit and store photos, etc.

Besides, the CPs 30 may be any server operators that provide a variety of services to the image display apparatus 10 over the Internet, such as a Packet Filter (PF) server, an Electronic Program Guide (EPG) provider, an Electronic Content Guide (ECG) provider, a portal server operator, etc.

The PF server operator is a proxy that manages all broadcast information and location information on behalf of a CP. The PF server operator provides information about airing times of broadcast programs in a broadcast station, location information needed for broadcasting, and information needed for a user to access the broadcast programs.

An EPG service provides EPG information so that a user detects a broadcast program on a time zone basis and on a channel basis.

An ECG service provides information about content that CPs have, information about the positions of access servers, and access authority to users. That is, an ECG is an electronic content guide that enables a user to easily access servers having content and provides details of content to the user.

A portal server provides a portable service which connects a user to a broadcast station or a Web server of a CP, upon request of the user. The portal server functions to enable a user to search for a list of programs available in each broadcast station or CP.

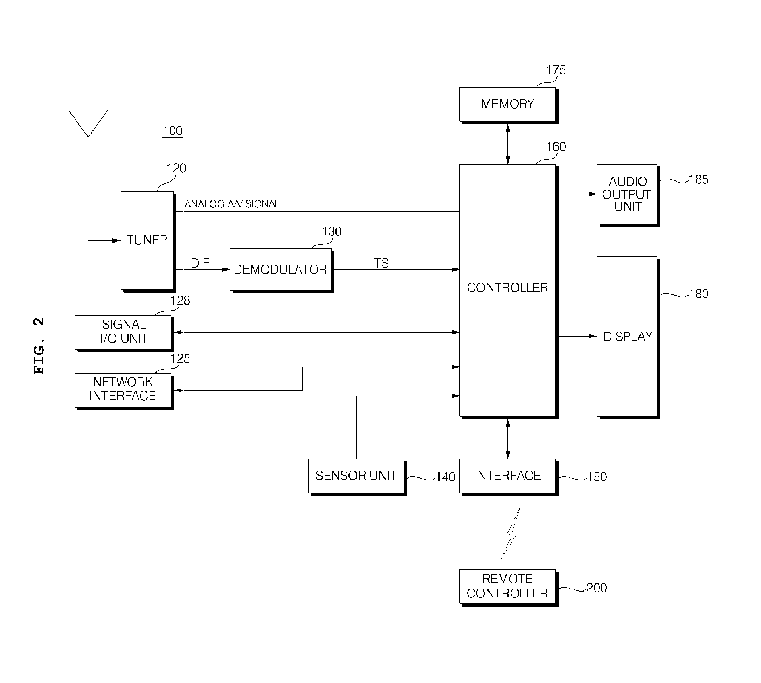

FIG. 2 is a block diagram of an image display apparatus according to an embodiment of the present invention.

Referring to FIG. 2, an image display apparatus 100 according to an embodiment of the present invention includes a tuner 120, a network interface 125, a signal Input/Output (I/O) unit 128, a demodulator 130, a sensor unit 140, an interface 150, a controller 160, a memory 175, a display 180, and an audio output unit 185.

The tuner 120 selects a Radio Frequency (RF) broadcast signal corresponding to a channel selected by a user from among a plurality of RF broadcast signals received through an antenna and downconverts the selected RF broadcast signal into a digital Intermediate Frequency (IF) signal or an analog baseband Audio/Video (A/V) signal. More specifically, if the selected RF broadcast signal is a digital broadcast signal, the tuner 120 downconverts the selected RF broadcast signal into a digital IF signal, DIF. On the other hand, if the selected RF broadcast signal is an analog broadcast signal, the tuner 120 downconverts the selected RF broadcast signal into an analog baseband A/V signal, CVBS/SIF. That is, the tuner 120 may be a hybrid tuner capable of processing not only digital broadcast signals but also analog broadcast signals. The analog baseband A/V signal CVBS/SIF may be directly input to the controller 160.

The tuner 120 may be capable of receiving RF broadcast signals from an Advanced Television Systems Committee (ATSC) single-carrier system or from a Digital Video Broadcasting (DVB) multi-carrier system, as described later.

While the single tuner 120 is shown in FIG. 2, to which the present invention is not limited, the image display apparatus 100 may include a plurality of tuners. In this case, unlike the tuner 120, a second tuner (not shown) may sequentially or periodically receive a number of RF broadcast signals corresponding to all broadcast channels previously added to the image display apparatus 100. Similarly to the tuner 120, the second tuner may downconvert a received RF broadcast signal into a digital IF signal, DIF or an analog baseband A/V signal, CVBS/SIF.

The demodulator 130 receives the digital IF signal DIF from the tuner 120 and demodulates the digital IF signal DIF.

For example, if the digital IF signal DIF is an ATSC signal, the demodulator 130 may perform 8-Vestigal SideBand (VSB) demodulation on the digital IF signal DIF. The demodulator 130 may also perform channel decoding. For channel decoding, the demodulator 130 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 130 performs Coded Orthogonal Frequency Division Multiple Access (COFDMA) demodulation on the digital IF signal DIF. The demodulator 130 may also perform channel decoding. For channel decoding, the demodulator 130 may include a convolution decoder (not shown), a de-interleaver (not shown), and a Reed-Solomon decoder (not shown) so as to perform convolution decoding, de-interleaving, and Reed-Solomon decoding.

The network interface 125 serves as an interface between the image display apparatus 100 and a wired/wireless network such as the Internet.

The network interface 125 may include a wireless communication module with an Ethernet port, for connection to the Internet wirelessly or by cable. For wireless Internet connection, the network interface 125 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 125 may receive content or data from a CP or a network operator over a network. Specifically, the network interface 125 may receive content such as broadcast signals, games, VoD files, etc. and information related to the content from a CP or a network operator over a network. Also, the network interface 125 may receive update information and update files of firmware from the network operator.

The image display apparatus 100 may access the Internet or conduct communication through the Ethernet port and the wireless communication module of the network interface 125. The image display apparatus 100 may be allocated to an IP address, receives data packets through a network, and process the received data packets. If the data packets are multimedia data such as video data and audio data, they may be stored or reproduced.

The signal I/O unit 128 transmits signals to or receives signals from an external device. For signal transmission and reception to and from an external device, the signal I/O unit 128 may include an A/V I/O unit (not shown) and a wireless communication module (not shown).

The signal I/O unit 128 is connected to an external device such as a Digital Versatile Disc (DVD) player, a Bluray player, a game console, a camcorder, or a computer (e.g., a laptop computer). Then, the signal I/O unit 128 externally receives video, audio, and/or data signals from the external device and transmits the received external input signals to the controller 160. In addition, the signal I/O unit 128 may output video, audio, and data signals processed by the controller 160 to the external device.

In order to receive or transmit A/V signals from or to the external device, the A/V I/O unit of the signal I/O unit 128 may include an Ethernet port, a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, a D-sub port, an Institute of Electrical and Electronics Engineers (IEEE)-1394 port, a Sony/Philips Digital Interconnect Format (S/PDIF) port, and a LiquidHD port.

Digital signals received through the Ethernet port, the USB port, the component port, the DVI port, the HDMI port, the RGB port, the D-sub port, the IEEE-1394 port, the S/PDIF port and the LiquidHD port may be input to the controller 160. Analog signals received through the CVBS port and the S-video port may be converted into digital signals through an analog-to-digital converter (not shown).

The wireless communication module of the signal I/O unit 128 may wirelessly access the Internet. In addition, the wireless communication module may perform short-range wireless communication with other electronic devices. For the short-range wireless communication, the wireless communication module may use Bluetooth, Radio-Frequency IDentification (RFID), Infrared Data Association (IrDA), Ultra WideBand (UWB), and ZigBee.

The signal I/O unit 128 may be connected to various set-top boxes through at least one of the Ethernet port, the USB port, the CVBS port, the Component port, the S-video port, the DVI port, the HDMI port, the RGB port, the D-sub port, the IEEE-1394 port, the S/PDIF port, and the LiquidHD port and may thus receive data from or transmit data to the various set-top boxes. For example, when connected to an IPTV set-top box, the signal I/O unit 128 may transmit video, audio and data signals processed by the IPTV set-top box to the controller 160 and may transmit various signals received from the controller 160 to the IPTV set-top box. The term 'IPTV' as used herein covers an Internet TV capable of providing Internet access services.

If the signal I/O unit 128 outputs a digital signal, the controller 160 may receive the digital signal and process it. While the output digital signal may be configured in various formats, it is assumed that the digital signal is a stream signal TS in FIG. 2. The stream signal TS may be a signal in which a video signal, an audio signal and a data signal are multiplexed. For example, the stream signal TS may be an MPEG-2 TS signal obtained by multiplexing an MPEG-2 video signal and a Dolby AC-3 audio signal.

The demodulator 130 may perform demodulation and channel decoding on the digital IF signal DIF received from the tuner 120, thereby obtaining a stream signal TS. The stream signal TS may be a signal in which a video signal, an audio signal and a data signal are multiplexed. For example, the stream signal TS may be an MPEG-2 TS signal obtained by multiplexing an MPEG-2 video signal and a Dolby AC-3 audio signal. An MPEG-2 TS packet may include a 4-byte header and a 184-byte payload.

The stream signal TS is input to the controller 160 and is thus subjected to demultiplexing and signal processing. Prior to input to the controller 160, the stream signal TS may be input to a channel browsing processor (not shown) and may thus be subjected to a channel browsing operation.

In order to properly handle not only ATSC signals but also DVB signals, the demodulator 130 may include an ATSC demodulator and a DVB demodulator.

The interface 150 transmits a signal received from the user to the controller 160 or transmits a signal received from the controller 160 to the user. For example, the interface 150 may receive various user input signals such as a power-on/off signal, a channel selection signal, and a screen setting signal from a remote controller 200 or may transmit a signal received from the controller 160 to the remote controller 200, according to various communication schemes such as RF and IR communication schemes.

The controller 160 may demultiplex an input stream signal into a number of signals and process the demultiplexed signals so that the processed signals can be output as A/V data. The controller 160 may provide overall control to the image display apparatus 100.

The controller 160 may receive an update file of software (i.e. firmware) of the CP 30 from the network operator 20 and update the software using the update file.

The controller 160 may include a demultiplexer (not shown), a video processor (not shown), an audio processor (not shown), a data processor, and an On-Screen Display (OSD) generator (not shown).

The controller 160 may control the tuner 120 to tune to an RF broadcast signal of a user-selected channel or a pre-stored channel.

The controller 160 may demultiplex an input stream signal, e.g. an MPEG-2 TS signal, into a video signal, an audio signal and a data signal.

Thereafter, the controller 160 may process the video signal. For example, if the video signal is an encoded signal, the controller 160 may decode the video signal. More specifically, if the video signal is an MPEG-2 encoded signal, the controller 160 may decode the video signal by MPEG-2 decoding. On the other hand, if the video signal is an H.264-encoded DMB or DVB-handheld (DVB-H) signal, the controller 160 may decode the video signal by H.264 decoding.

In addition, the controller 160 may adjust the brightness, tint and color of the video signal.

The video signal processed by the controller 160 is displayed on the display 180. Alternatively or additionally, the video signal processed by the controller 160 may be output to an external output port connected to an external output device.

The controller 160 may process the audio signal obtained by demultiplexing the input stream signal. For example, if the audio signal is an encoded signal, the controller 160 may decode the audio signal. More specifically, if the audio signal is an MPEG-2 encoded signal, the controller 160 may decode the audio signal by MPEG-2 decoding. On the other hand, if the audio signal is an MPEG-4 Bit Sliced Arithmetic Coding (BSAC)-encoded terrestrial DMB signal, the controller 160 may decode the audio signal by MPEG-4 decoding. If the audio signal is an MPEG-2 Advanced Audio Coding (AAC)-encoded DMB or DVB-H signal, the controller 180 may decode the audio signal by AAC decoding.

In addition, the controller 160 may adjust the bass, treble or volume of the audio signal.

The audio signal processed by the controller 160 is output to the audio output unit 185, e.g., a speaker. Alternatively or additionally, the audio signal processed by the controller 160 may be output to an external output port connected to an external output device.

The controller 160 may process an input analog baseband A/V signal, CVBS/SIF. The analog baseband A/V signal, CVBS/SIF may be received from the tuner 120 or the signal I/O unit 128. The video signal and audio signal of the processed analog baseband A/V signal are respectively displayed on the display 180 and output as voice through the audio output unit 185, for example, a speaker.

The controller 160 may process the data signal obtained by demultiplexing the input stream signal. For example, if the data signal is an encoded signal such as an Electronic Program Guide (EPG), which provides broadcast information (e.g. start time and end time) about programs played on each channel, the controller 160 may decode the data signal. Examples of an EPG include ATSC-Program and System Information Protocol (ATSC-PSIP) information and DVB-Service Information (DVB-SI). ATSC-PSIP information or DVB-SI may be included in the header of a TS, i.e., the 4-byte header of an MPEG-2 TS.

The controller 160 may perform a control operation for OSD processing. More specifically, the controller 160 may generate an OSD signal for displaying various information on the display 180 as graphics or text, based on a user input signal received from the remote controller 200 or at least one of a processed video signal or a processed data signal.

The OSD signal may include various data such as a User-Interface (UI) screen, various menu screens, widgets, and icons for the image display apparatus 100.

The memory 175 may store various programs for processing and controlling signals of the controller 160, and may also store processed video, audio and data signals.

The memory 175 may temporarily store a video, audio or data signal received from the signal I/O unit 128.

The memory 175 may include, for example, at least one of a flash memory-type memory medium, a hard disk-type memory medium, a multimedia card micro-type memory medium, a card-type memory, a Random Access Memory (RAM), or a Read-Only Memory (ROM) such as an Electrically Erasable Programmable ROM (EEPROM).

The image display apparatus 100 may open a file (such as a video file, a still image file, a music file, or a text file) stored in the memory 175 to the user.

The display 180 may convert a processed video signal, a processed data signal, and an OSD signal received from the controller 160 or a video signal and a data signal received from the external signal input unit 128 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and a three-dimensional (3D) display.

The display 180 may also be a touch screen that can be used not only as an output device but also as an input device. The user may input data or a command directly on the touch screen. When the user touches a specific object displayed on the touch screen with his or her finger or a tool such as a stylus pen, the touch screen outputs a touch signal corresponding to the touch to the controller 160 so that the controller 160 performs an operation corresponding to the touch signal. A touch input may be made with any tool other than the fingertip or the stylus pen.

There are many types of touch screens including a capacitive touch screen and a resistive touch screen, to which the present invention is not limited.

The sensor unit 140 may include a proximity sensor, a touch sensor, a voice sensor, a location sensor, and a motion sensor.

The proximity sensor senses an approaching object or the presence or absence of a nearby object without any physical contact. The proximity sensor senses a nearby object based on a variation in an alternating magnetic field, an electromagnetic field, or electrostatic capacitance.

The touch sensor may be the touch screen of the display 180. The touch sensor may sense a user-touched position or touch strength on the touch screen. The voice sensor may sense the user's voice or a variety of sounds created by the user. The location sensor may sense the user's location. The motion sensor may sense the user's gestures or movements. The location sensor or the motion sensor may be configured as an IR sensor or a camera and may sense the distance between the image display apparatus 100 and the user, the presence or absence of a user's motion, the user's hand gestures, the height of the user, and the eye height of the user.

The above-described sensors may output the results of sensing the voice, touch, location and motion of the user to a sensing signal processor (not shown), or they may primarily interpret the sensed results, generate sensing signals corresponding to the interpretations, and output the sensing signals to the controller 160.

The audio output unit 185 may receive a processed audio signal (e.g., a stereo signal, a 3.1-channel signal or a 5.1-channel signal) from the controller 160 and output the received audio signal as voice. The audio output unit 185 may be various types of speakers.

The remote controller 200 transmits a user input to the interface 150. For the transmission of a user input, the remote controller 200 may use various communication schemes such as Bluetooth, RF, IR, UWB and ZigBee.

In addition, the remote controller 200 may receive a video signal, an audio signal and a data signal from the interface 150 and output the received signals.

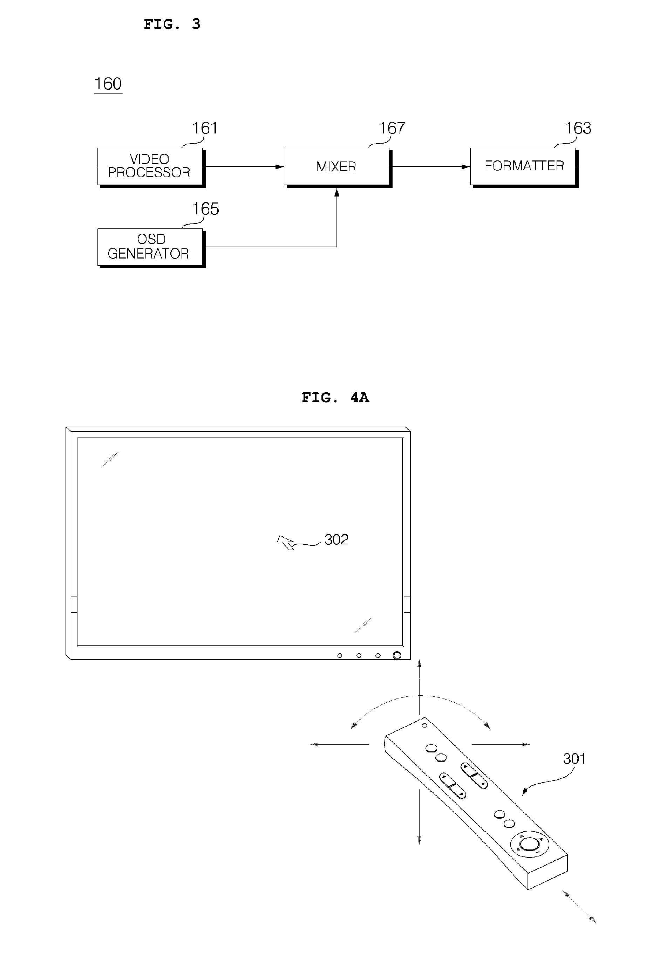

FIG. 3 is an exemplary block diagram of a controller illustrated in FIG. 2.

Referring to FIG. 3, the controller 160 may include a video processor 161 and a formatter 360 according to an embodiment of the present invention.

The video processor 161 may process a video signal included in a broadcast signal received through the tuner 110 and the demodulator 120 or a video signal included in an external signal received through the signal I/O unit 128. The received signal may be obtained by demultiplexing a stream signal TS, as stated before.

If the demultiplexed video signal is, for example, an MPEC-C part 3 depth image signal, the video signal may be decoded by an MPEC-C decoder. In addition, disparity information may be decoded.

The video signal decoded by the video processor 161 may be configured in various 3D formats. For example, the video signal may be a 3D image signal including a color image and a depth image or including multi-viewpoint image signals. The multi-viewpoint image signals may be a left-eye image signal and a right-eye image signal, for example.

For 3D visualization, the following 3D formats are available: side-by-side, top/down, frame sequential, interlaced format, and checker box. A left-eye image and a right-eye image are arranged side by side in the side by side format. The left-eye image and the right-eye image are stacked vertically in the top/down format, while they are arranged in time division in the frame sequential format. In the interlaced format, the left-eye image and the right-eye image alternate line by line. The left-eye image and the right-eye image are mixed on a box basis in the checker box format.

The formatter 163 may separate a 2D video signal and a 3D video signal from the decoded video signal. In addition, the formatter 163 may separate a 3D image signal into multi-viewpoint image signals, for example, left-eye and right-eye image signals.

The controller 160 may further include an OSD generator 165 and a mixer 167.

The OSD generator 165 may receive an image signal related to caption or data broadcasting and generate an OSD signal related to the caption or data broadcasting.

The mixer 167 may mix the decoded video signal processed by the video processor 161 with the OSD signal generated from the OSD generator 165. The formatter 163 may receive the mixed signal from the mixer 167 and generate a 3D image signal including an OSD signal.

The block diagram of the controller 160 illustrated in FIG. 3 is purely exemplary. Depending upon the specifications of the controller 160 in actual implementation, the components of the controller 160 may be combined or omitted or new components may be added. That is, two or more components are incorporated into one component or one component may be configured as separate components, as needed. In addition, the function of each block is described for the purpose of describing the exemplary embodiment of the present invention and thus specific operations or devices should not be construed as limiting the scope of the present invention.

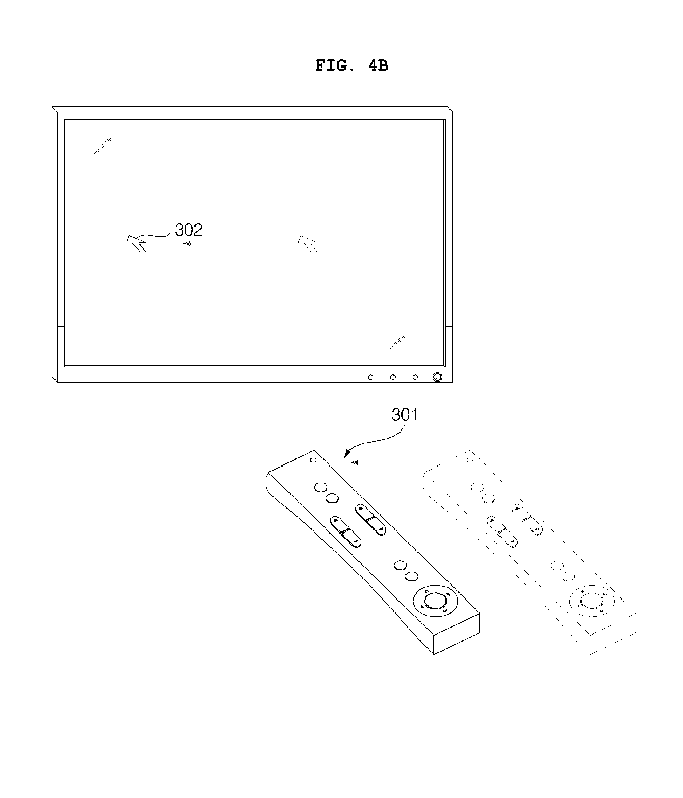

FIGS. 4A and 4B illustrate an example of the remote controller 200 illustrated in FIG. 2.

Referring to FIGS. 4A and 4B, the remote controller 200 may be a pointing device 301.

The pointing device 301 is a kind of the remote controller 200 for inputting commands to the image display apparatus 100. In operation, the pointing device 301 transmits or receives RF signals to or from the image display apparatus 100 according to an RF communication standard according to an embodiment of the present invention. As illustrated in FIG. 4A, a pointer 302 representing the movement of the pointing device 301 may be displayed on the image display apparatus 100.

A user may move the pointing device 301 up and down, back and forth, and side to side or may rotate the pointing device 301. The pointer 302 moves in accordance with the movement of the pointing device 301, as illustrated in FIG. 4B.

Referring to FIG. 4A, if the user moves the pointing device 301 to the left, the pointer 302 moves to the left accordingly. The pointing device 301 includes a sensor capable of detecting motion. The sensor of the pointing device 301 detects the movement of the pointing device 301 and transmits motion information corresponding to the result of the detection to the image display apparatus 100. Then, the image display apparatus 100 determines the movement of the pointing device 301 based on the motion information received from the pointing device 301, and calculates the coordinates of a target point to which the pointer 302 should be shifted in accordance with the movement of the pointing device 301 based on the result of the determination.

Referring to FIGS. 4A and 4B, the pointer 302 moves according to whether the pointing device 301 moves vertically or horizontally or rotates. The moving speed and direction of the pointer 302 may correspond to the moving speed and direction of the pointing device 301.

In this embodiment, the pointer 302 moves in accordance with the movement of the pointing device 301. Alternatively or additionally, a specific command may be input to the image display apparatus 100 in response to the movement of the pointing device 301. That is, as the pointing device 301 moves back and forth, an image displayed on the image display apparatus 100 may be enlarged or reduced. Accordingly, this embodiment of the present invention does not limit the scope of the present invention.

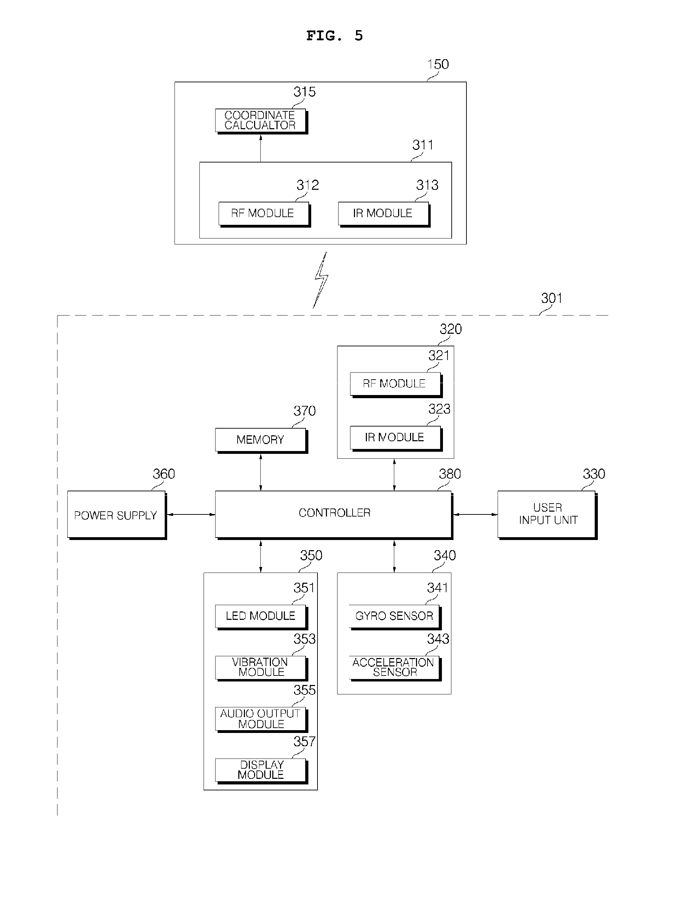

FIG. 5 is a detailed block diagram of the pointing device illustrated in FIGS. 4A and 4B and the interface 150 illustrated in FIG. 2.

Referring to FIG. 5, the pointing device 301 may include a wireless communication module 320, a user input unit 330, a sensor unit 340, an output unit 350, a power supply 360, a memory 370, and a controller 380.

The wireless communication module 320 may transmit signals to and/or receive signals from the image display apparatus 100. The wireless communication module 320 may include an RF module 321 for transmitting RF signals to and/or receiving RF signals from the interface 150 of the image display apparatus 100 according to an RF communication standard. The wireless communication module 320 may also include an IR module 323 for transmitting IR signals to and/or receiving IR signals from the interface 150 of the image display apparatus 100 according to an IR communication standard.

The pointing device 301 transmits motion information regarding the movement of the pointing device 301 to the image display apparatus 100 through the RF module 321 in this embodiment. The pointing device 301 may also receive signals from the image display apparatus 100 through the RF module 321. The pointing device 301 may transmit commands, such as a power on/off command, a channel switching command, or a sound volume change command, to the image display apparatus 100 through the IR module 323, as needed.

The user input unit 330 may include a keypad and/or a plurality of buttons. The user may enter commands to the image display apparatus 100 by manipulating the user input unit 330. If the user input unit 330 includes a plurality of hard-key buttons, the user may input various commands to the image display apparatus 100 by pressing the hard-key buttons. Alternatively or additionally, if the user input unit 330 includes a touch screen displaying a plurality of soft keys, the user may input various commands to the image display apparatus 100 by touching the soft keys. The user input unit 330 may also include various input tools other than those set forth herein, such as a scroll key and/or a jog key, which should not be construed as limiting the present invention.

The sensor unit 340 may include a gyro sensor 341 and/or an acceleration sensor 343. The gyro sensor 341 may sense the movement of the pointing device 301, for example, in X-, Y-, and Z-axis directions, and the acceleration sensor 343 may sense the moving speed of the pointing device 301.

The output unit 350 may output a video and/or audio signal corresponding to a manipulation of the user input unit 330 or a signal transmitted by the image display apparatus 100. The user may easily identify whether the user input unit 330 has been manipulated or whether the image display apparatus 100 has been controlled based on the video and/or audio signal output by the output unit 350.

The output unit 350 may include a Light Emitting Diode (LED) module 351 which is turned on or off whenever the user input unit 330 is manipulated or whenever a signal is received from or transmitted to the image display apparatus 100 through the wireless communication module 320, a vibration module 353 which generates vibrations, an audio output module 355 which outputs audio data, and a display module 357 which outputs video data.

The power supply 360 supplies power to the pointing device 301. If the pointing device 301 is kept stationary for a predetermined time or longer, the power supply 360 may, for example, reduce or cut off supply of power to the pointing device 301 in order to save power. The power supply 360 may resume supply of power if a specific key on the pointing device 301 is manipulated.

The memory 370 may store various application data for controlling or operating the pointing device 301. The pointing device 301 may wirelessly transmit signals to and/or receive signals from the image display apparatus 100 in a predetermined frequency band through the RF module 321. The controller 380 of the pointing device 301 may store information regarding the frequency band used for the pointing device 301 to wirelessly transmit signals to and/or wirelessly receive signals from the paired image display apparatus 100 in the memory 370 and may then refer to this information for use at a later time.

The controller 380 provides overall control to the pointing device 301. For example, the controller 380 may transmit a signal corresponding to a key manipulation detected from the user input unit 330 or a signal corresponding to motion of the pointing device 301, as sensed by the sensor unit 340, to the interface 150 of the image display apparatus 100.

The interface 150 of the image display apparatus 100 may include a wireless communication module 311 which wirelessly transmits signals to and/or wirelessly receives signals from the pointing device 301, and a coordinate calculator 315 which calculates a pair of coordinates representing the position of the pointer 302 on the display screen, which is to be moved in accordance with the movement of the pointing device 301.

The wireless communication module 311 includes an RF module 312 and an IR module 313. The RF module 312 may wirelessly transmit RF signals to and/or wirelessly receive RF signals from the RF module 321 of the pointing device 301. The IR module 313 may wirelessly receive IR signals from the IR module 321 of the pointing device 301 according to the IR communication standard.

The coordinate calculator 315 may receive motion information regarding the movement of the pointing device 301 from the wireless communication module 320 of the pointing device 301 and may calculate a pair of coordinates (x, y) representing the position of the pointer 302 on a screen of the display 180 by correcting the motion information for possible errors such as user hand tremor.

A signal received in the image display apparatus 100 from the pointing device 301 through the interface 150 may be transmitted to the controller 160. Then, the controller 160 may acquire information regarding the movement of the pointing device 301 and information regarding a key manipulation detected from the pointing device 301 from the signal received from the interface 150, and may control the image display apparatus 100 based on the acquired information.

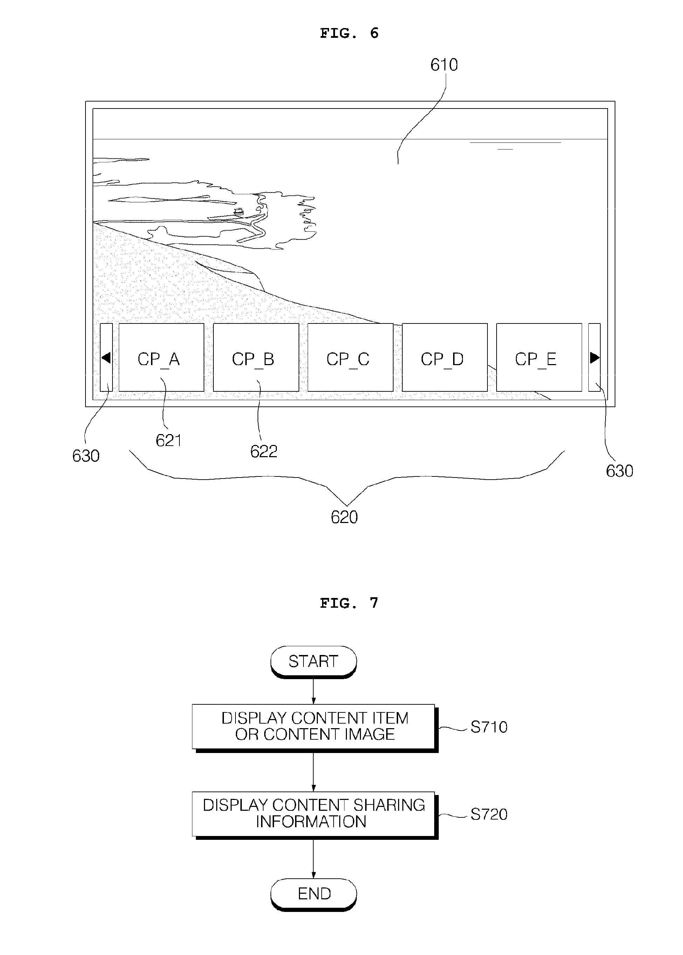

FIG. 6 illustrates an exemplary menu screen displayed on the image display apparatus according to an embodiment of the present invention.

The menu screen is an initial screen or a main screen displayed when the image display apparatus enters an operation mode that provides a menu so as to enable a user to select one of a plurality of CPs and access the selected CP.

Referring to FIG. 6, the menu screen may include objects 620 representing a plurality of CPs and a background image 610 matching a specific theme.

The number, sizes, positions and layout of objects included in a screen may vary according to embodiments of the present invention. The objects 620 may include the name of each CP and a still image or moving picture representing the CP. The image display apparatus may directly access servers of the CPs 30 and download the objects 620 from the servers. The objects 620 may be updated by the network operator 20 or the CPs 30.

The background image 610 may contain information or a notification image. The information or the notification message may be provided by the network operator 20 or a CP 30.

The objects 620 correspond to respective CPs, CP_A to CP_E. The user may access a server of a CP and receive a service from the server of the CP by selecting an object 620 representing the CP. The objects 620 may be displayed in the form of still images or moving pictures related to the theme of the background image 610. These still images or moving pictures may be provided by the CPs represented by the objects 620.

The user may select an object representing a CP using the remote controller 200 such as the pointing device 301.

While the objects 620 are shown in FIG. 6 as representing CP_A (621), CP_B (622), CP_C, CP_D, and CP_E, the types and number of objects included in the menu screen may vary. Scroll bars 630 may be placed at the right and left sides of the objects 620 so that upon user selection of a scroll bar 630, additional objects are displayed.

As stated before, the CPs may provide content related to specific subjects or categories, such as natural science, weather, movies, photos, etc.

Upon user selection of one of the objects 620, for example, CP_B, the selected object 620 representing CP_B may be highlighted distinguishably from the other objects 620. With the selected object 620 representing CP_B highlighted, when the user selects another object by manipulating an arrow button displayed on the display 180 using the remote controller or a directional key of the remote controller, the selected object may be highlighted. Upon user selection of an selection key or a key designated for selection after a specific object is selected, the server of a CP corresponding to the selected object may be connected and an initial screen of the CP server may be displayed.

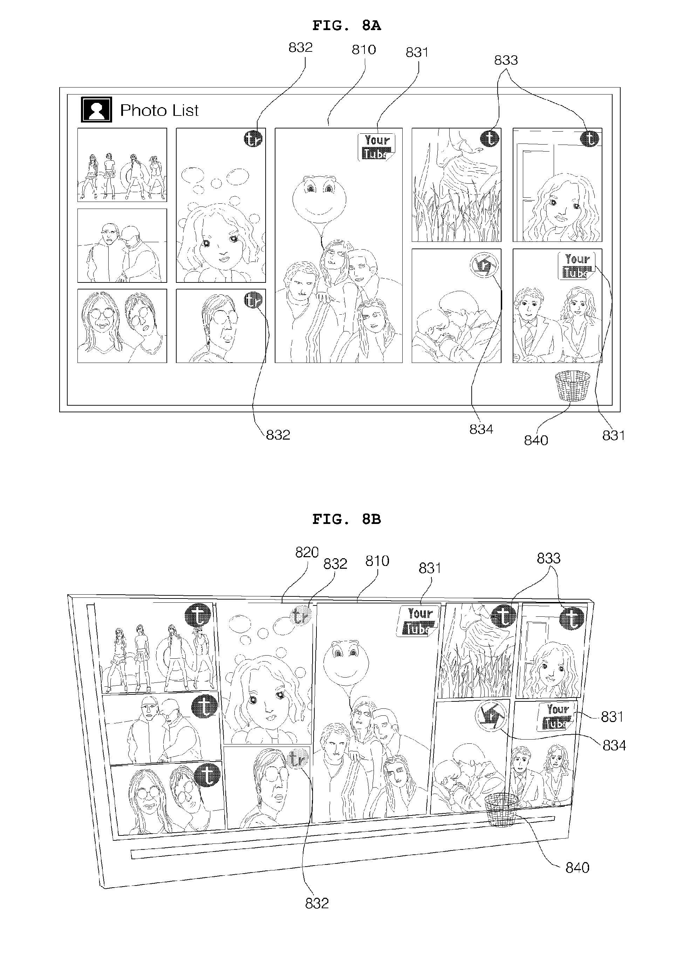

FIG. 7 is a flowchart illustrating a method for operating an image display apparatus according to an embodiment of the present invention, and FIGS. 8A to 12 are views referred for describing the method for operating an image display apparatus according to an embodiment of the present invention, illustrated in FIG. 7.

Referring to FIG. 7, a method for operating an image display apparatus connected to at least one CP according to an embodiment of the present invention includes displaying a content item or content image which represents content on the display 180 (S710) and displaying content sharing information about the content on the display 180 (S720). The content item may be text such as a content name and the content image may be a still image or moving picture. For instance, if the content is a photo, the content image may be the photo, that is, the content itself. If the content is a moving picture, the content image may be a thumbnail image extracted from the content. If the content is information about a musician, the content image may be an image related to music content such as an image of a singer, a music performer, etc.

The controller 160 may control display of the content sharing information. The content sharing information includes a first object representing at least one of a CP that transmitted the content to the image display apparatus or a CP that received the content from the image display apparatus. The first object may be overlaid on the content image.

The user may upload content that the user preserves to a CP so that the user or another user uses the content. However, as the user preserves more content and more CPs are accessible, the user may have difficulty in memorizing what content the user uploaded and what CPs the user uploaded the content to. Therefore, the content may not be efficiently managed.

In accordance with the present invention, a first object representing a CP that received content from the image display apparatus is displayed together with the content. Therefore, the user can readily identify content sharing information about the content.

In addition, a first object representing a CP that transmitted content to the image display apparatus, that is, a first object indicative of a content source that the image display apparatus accessed and received (e.g. downloaded) content from may be displayed. Thus the user can readily identify the CP that provided the content. If the user wants to use similar content, the user may first access the displayed CP to thereby shorten time taken to search for the desired content.

Referring to FIG. 8A, content images 810 representing content shared with a plurality of CPs are displayed. In addition, first objects 831 to 834 representing the CPs are overlaid on the content images 810. The first objects 831 to 834, which are different in shape, represent different CPs.

The first objects 831 to 834 may be logos, photos, icons, moving pictures, etc. representing the CPs. The first objects 831 to 834 may be placed at variable positions on the content images 810. For example, a first object may take the form of a logo attached onto a content image like a sticker. The user may shift the first objects 831 to 834 using the pointing device 301.

Upon selection of a content item or a content image 810, the content item or the content image may be enlarged or contracted, or may be highlighted. In addition, the content images 810 may be sorted by CP or by content type.

An object representing a specific function may be displayed on the display 180. The specific function may be performed by dragging a content item or a content image and dropping it onto the object representing the specific function. For instance, when a content image 810 is dragged and dropped onto a trash icon 840 representing deletion, content represented by the content image 810 may be deleted.

In an embodiment of the present invention, at least one of a content item, a content image or a first object may be a 3D object. FIG. 8B illustrates a 3D representation of the screen of FIG. 8A.

Referring to FIG. 8B, a 3D object displayed on the display 180 may be displayed as a 3D image looking protruding toward a user. The depth and size of the 3D image may be changed. The degree to which the 3D image looks protruding depends on its depth.

Specifically, the video processor 161 may process an input 3D signal and the formatter 163 may generate a graphic object for a 3D image. The depth of the 3D object may be set to be different from the depth of an image displayed on the display 180.

A first object representing a CP that received content from the image display apparatus may be different from a first object representing a CP that transmitted content to the image display apparatus, in terms of at least one of size, transparency, color, position or brightness.

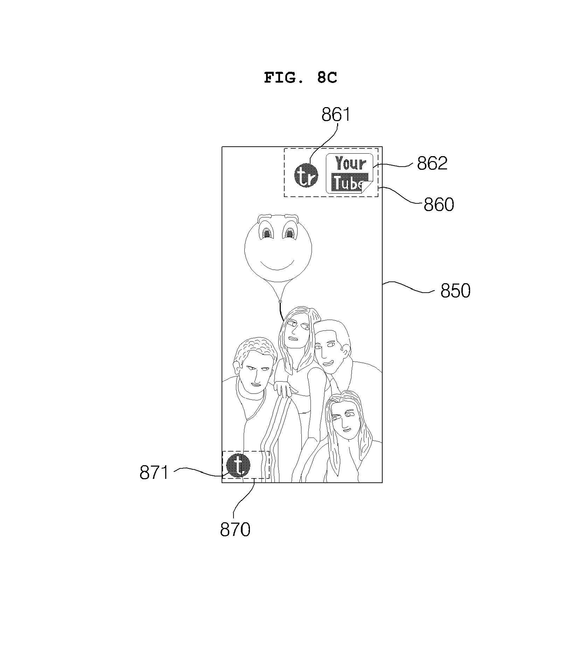

Referring to FIG. 8C, objects 861 and 862 representing CPs that have received content are displayed in a first area 860 of a content image 850 representing the content. As the CPs to which the image display apparatus has uploaded the content are indicated, the user can easily identify the upload sharing state of the content. In addition, an object 871 representing a CP that has transmitted the content to the image display apparatus is displayed in a second area 870 of the content image 850. Thus the user can easily identify the provider of the content.

While the objects 861 and 862 are distinguishably displayed at different positions from the object 871 in FIG. 8C, they may be configured to be different in size, transparent, color and/or brightness.

Meanwhile, the controller 160 may control display of second objects representing CPs that can transmit or receive content to or from the image display apparatus.

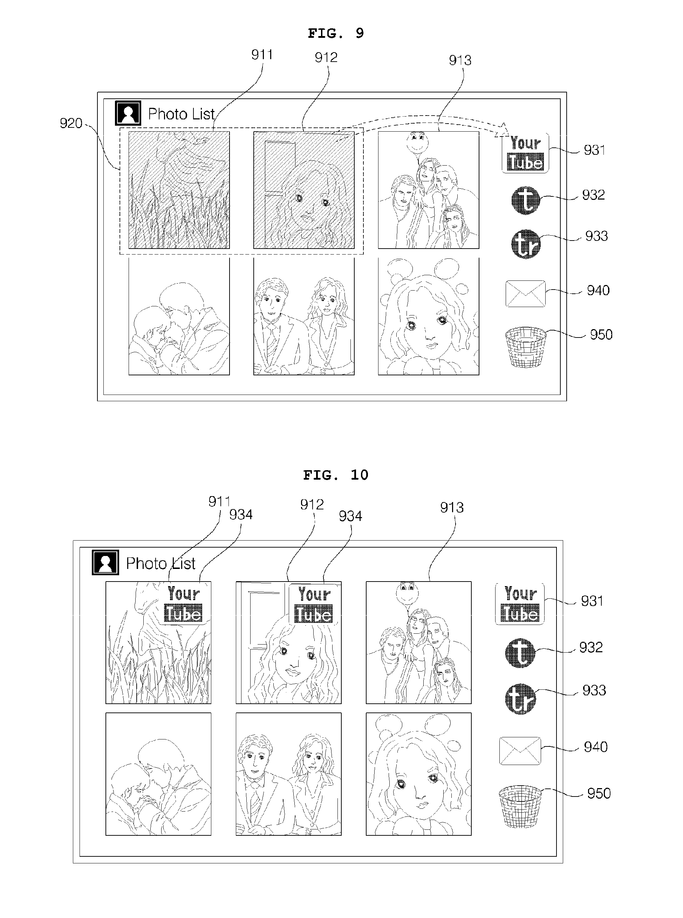

Referring to FIG. 9, a plurality of content images 911, 912 and 913 are displayed and second objects 931, 932 and 933 representing CPs that can transmit or receive content to or from the image display apparatus are displayed at a right side of the display 180.

The controller 160 may control differentiated display of the second objects 931, 932 and 933 in at least one of size, transparency, color or brightness according to the connection states between the image display apparatus and the CPs represented by the second objects 931, 932 and 933. For example, if the image display apparatus is in a poor connection state with a specific CP, a second object representing the specific CP may be displayed in a small size or in black and white.

If the image display apparatus or the Internet is defective, all or most of CPs may be poorly connected to the image display apparatus. In this case, all or most of second objects are scaled down or displayed in black and white, distinguishably from second objects representing CPs in a good connection state with the image display apparatus.

While three second objects are displayed at the right side of the display 180 in FIG. 9, the number and positions of second objects representing CPs displayed on the display 180 may be changed.

Meanwhile, when a content item or a content image is dragged and dropped onto a second object or when the second object is dragged and dropped onto the content item or the content image, content represented by the content item or the content image may be transmitted to a CP represented by the second object.

The dragging may be performed using the remote controller described before with reference to FIGS. 2, 3 and 4. In addition, the controller 160 may receive an input signal from the remote controller via the interface 150 and, if the input signal corresponds to at least one of a preset shift operation, a preset setting operation, or a preset edit operation, the controller 160 may control performing of the at least one preset operation.

For example, one of a plurality of images or objects may be focused on or selected using the pointer 302 corresponding to motion of the pointing device 301, and the pointer 302 may be dragged to another position using the pointing device 301. Then when the image or object is released from the focused or selected state, it may be dropped onto the position.

In FIG. 9, when a plurality of content images 911 and 912 are dragged and dropped onto the second object 931 representing a CP, CP_A, content represented by the content images 911 and 912 is uploaded to the CP, CP_A.

That is, content may be transmitted to a CP by dragging a content item or a content image representing the content and dropping it onto a second object representing the CP. The opposite case is also possible. A second object representing a CP may be dragged to and dropped onto a content image, to thereby transmit content represented by the content image to the CP.

The content sharing information may indicate the total size of content. During transmission of the content, the content sharing information may include an object representing at least one of a total size of the content, a ratio of a transmitted size to the total size, an estimated transmission time, a transmission rate, an estimated transmission completion time, or time left to complete transmission. If objects are configured in various forms such as text, digits, and graphs, the user may not be bored during content transmission.

Upon completion of the content transmission, content sharing information including a first object 934 may be displayed to indicate that the content represented by the content images 911 and 912 have been uploaded to the CP represented by the first object 934, as illustrated in FIG. 10.

To ensure consistency between the first object 934 and the second object 931, if the first and second objects 934 and 931 represent the same CP, they may be displayed in the form of graphic objects of the same shape.

An object representing a specific function may be displayed on the display 180. When a content item or a content image is dragged and dropped onto the object representing the specific function, this function may be performed. For instance, a content item or a content image is dragged and dropped onto an e-mail object 940 representing an e-mail function, content represented by the content item or the content image may be transmitted by e-mail. If a content item or a content image is dragged and dropped onto a trash object 950 representing deletion, content represented by the content item or the content image may be deleted.

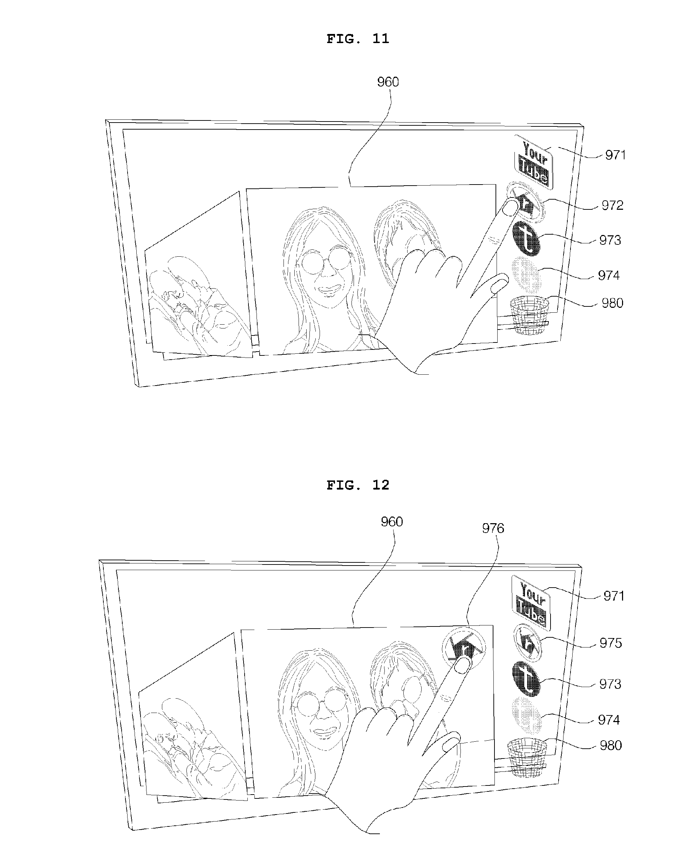

FIGS. 11 and 12 illustrate screens on which content images and objects are displayed as 3D images according to an embodiment of the present invention.

The controller 160, particularly the formatter 163 may process a signal so as to change at least one of the displayed size and depth of a 3D object. Further, the formatter 163 may process a signal such that as a 3D object is deeper, the disparity between the left-eye and right-eye images of the 3D object gets narrower. The controller 160, particularly the formatter 163 may process a signal so that at least one image 960 looks more protruding than other images.

Content represented by a content image or a content item may be transmitted to a CP by dragging the content image or the content item and dropping it onto a second object representing the CP or by dragging the second object and dropping it onto the content item or the content image.

Specifically, when one 972 of second objects 971 to 974 is selected and dropped onto the content image 960, content represented by the content image 960 may be transmitted to a CP represented by the second object 972. The opposite case is also possible. That is, the content image 960 may be dragged and dropped onto the second object 972 to thereby transmit the content to the CP. Content may be deleted using a trash object 980 in a similar manner.

The selected second object 972 may be enlarged or contracted, or may be highlighted. While content is being transmitted to a CP represented by the second object 972 or the second object 972 is being dragged, the second object 972 may be displayed differently, for example, in color, size, etc. and thus may take the form of a second object 975 in FIG. 12.

As described before with reference to FIG. 2, the sensor unit 140 may receive a user's gesture signal. If the user's gesture signal indicates at least one of a preset shift operation, a preset setting operation or a preset edit operation, the controller 160 may control performing of the indicated operation. FIGS. 11 and 12 illustrate an example of dragging by a user's gesture.

As is apparent from the above description, a content item or content image representing content is displayed along with content sharing information including various graphic objects. Therefore, a user can readily identify the on-line sharing state of the content. Especially because objects representing CPs that the user transmitted content are overlaid on content images representing the content, the user can easily identify the upload states of a huge amount of content that the user has and thus can efficiently manage the content. In addition, the image display apparatus of the present invention supports a variety of input schemes such as a remote controller-based signal input, gesture-based signal input, etc., thereby increasing user friendliness.

As a consequence, content can be used and managed more conveniently, more efficiently and thus user convenience can be increased. Beyond a simply image display function, the image display apparatus may serve as a content hub for preserving and managing content by identifying and managing the sharing states of a huge amount of content.

The image display apparatus and the method for operating the same according to the foregoing embodiments are not restricted to the embodiments set forth herein. Therefore, variations and combinations of the exemplary embodiments set forth herein may fall within the scope of the present invention.

The method for operating an image display apparatus according to the foregoing embodiments may be implemented as code that can be written on a computer-readable recording medium and can thus be read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data memory, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed to realize the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method for operating an image display apparatus (100) connected to at least one Content Provider (CP), the method comprising:
displaying (S710) a content item or content image (810; 850; 911-912; 960) representing content; and
displaying (S720) content sharing information about the content,
wherein the content sharing information includes a first object (831-834; 861-862, 871; 934; 976) representing at least one of a CP that received the content from the image display apparatus or a CP that transmitted the content to the image display apparatus.

2. The method according to claim 1, wherein the displaying of content sharing information comprises overlaying the first object on the content image.

3. The method according to claim 1, further comprising displaying a second object (931-933; 971-974) representing a CP that can transmit content to the image display apparatus (100) or receive content from the image display apparatus.

4. The method according to claim 3, wherein the displaying of a second object (931-933; 971-974) comprises displaying the second object differently in at least one of size, transparency, color or brightness according to a connection state between the image display apparatus (100) and the CP represented by the second object.

5. The method according to claim 3, further comprising, when the content item or the content image (911-912) is dragged and dropped onto the second object (931), transmitting the content represented by the content item or the content image to the CP represented by the second object.

6. The method according to claim 3, further comprising, when the second object (972) is dragged and dropped onto the content item or the content image (960), transmitting the content represented by the content item or the content image to the CP represented by the second object.

7. The method according to claim 3, further comprising:
displaying an object (840; 940, 950) representing a predetermined function; and
performing the predetermined function, when the content item or the content image is dragged and dropped onto the object representing the predetermined function.

8. The method according to claim 1, wherein a first object (861-862) representing the CP that received the content from the image display apparatus (100) is different from a first object (871) representing the CP that transmitted the content to the image display apparatus, in at least one of size, transparency, color, position or brightness.

9. The method according to claim 1, wherein the content sharing information includes an object representing at least one of a total size of the content, a ratio of a transmitted size to the total size, an estimated transmission time, a transmission rate, an estimated transmission completion time, or time left to complete transmission.

10. The method according to claim 1, further comprising, upon selection of the content item or the content image, changing a size of the content item or the content image or highlighting the content item or the content image.

11. The method according to claim 1, wherein at least one of the content item, the content image, or the first object is a three-dimensional (3D) object.

12. The method according to claim 1, further comprising:
receiving a gesture signal from a user; and
performing, if the received gesture signal corresponds to at least one of a predetermined shift operation, a predetermined setting operation, or a predetermined edit operation, the at least one predetermined operation.

13. The method according to claim 1, further comprising:
receiving a signal from a remote controller (301); and
performing, if the received signal corresponds to at least one of a predetermined shift operation, a predetermined setting operation, or a predetermined edit operation, the at least one predetermined operation.

14. An image display apparatus, comprising:
a network interface (125) connected to at least one Content Provider (CP), for transmitting and receiving content to and from the at least one CP;
a display (180) for displaying a content item or content image (810; 850; 911-912; 960) representing content; and
a controller (160) for controlling display of content sharing information about the content,
wherein the content sharing information includes a first object (831-834; 861-862, 871; 934; 976) representing at least one of a CP that received the content from the image display apparatus or a CP that transmitted the content to the image display apparatus.

15. The image display apparatus according to claim 14, wherein the controller (160) is arranged for controlling display of a second object (931-933; 971-974) representing a CP that can transmit content to the image display apparatus (100) or receive content from the image display apparatus.
